# EUROPEAN PATENT APPLICATION

(11) **EP 0 629 071 A1**
(43) Date of publication of application: **14.12.1994**
(21) Application number: 94303522.0
(22) Date of filing: 18.05.1994
(51) Int. Cl.: H04M 11/06

(54) **Apparatus for connecting a computer to a telephone system**

(30) Priority: 07.06.1993 US 72900
(71) Applicant: AT&T GLOBAL INFORMATION SOLUTIONS INTERNATIONAL INC., Dayton, Ohio 45479 (US)
(72) Inventor: Heredia, Rafael, Aberdeen, NJ 07747 (US)
(74) Representative: Robinson, Robert George

(57) **Abstract**

A method and apparatus for communicating with a telephone system. The apparatus includes a computer having a data port, and a mobile telephone unit having a modem contained therein. The mobile telephone unit is connectable to the data port of said computer so as to couple the modem to said computer. The mobile telephone unit further includes a mobile telephone circuit which is connected to the modem.

## Description

The present invention relates to transmission and reception of data and voice signals, and more particularly to a mobile telephone unit which is adapted to be connected to a computer for transmitting data signals between the computer and a telephone system.

It is desirable to connect a computer (e.g. a laptop or portable computer) to a telephone system for a variety of reasons such as for sending and receiving fax messages, electronic mail and paging messages. A variety of devices have been designed which perform such a function. For example, U.S. Patent No. 5,020,090 discloses an apparatus for removably connecting a cellular portable telephone to a laptop or portable computer. The apparatus includes a track formed in the housing of the computer and is structured to slidably receive a cellular portable telephone whose battery pack has been removed. U.S. Patent No. 5,043,721 discloses a paging accessory for portable computing devices such as calculators, electronic notebooks, calendars or the like. The paging accessory includes a board on which is mounted a receiver for receiving page signals and a microprocessor for identifying and decoding a page signal intended for the accessory. The board includes connectors for inserting the accessory into a port of a portable computing device. Alternatively, the receiver may be incorporated directly into a device. The device is programmed to compare information in its memory such as a received phone number against a list of phone numbers to identify the person to be called in response to the page. In addition, an optional modem may be mounted on the board so as to allow the device to send pages in the form of text messages. U.S. Patent No. 5,189,632 describes a portable computer telephone device which includes a portable personal computer and a mobile phone integrated into one.

While it is known to use a mobile telephone, such as a cellular telephone, to connect a computer to a telephone system, heretofore, mobile phones could not connect a computer to a telephone system unless the computer had a built-in modem or unless an external stand-alone modem was connected to the computer via an external input/output data port of the computer.

It is an object of the present invention to provide a simplified apparatus for enabling a computer to communicate with a telephone system.

In accordance with one aspect of the present invention, there is provided an apparatus for communicating with a telephone system, comprising a computer having a data port, characterized in that the apparatus further comprises a mobile telephone unit having a modem contained therein, said mobile telephone unit being connectable to the data port of said computer so as to couple the modem to said computer.

In accordance with another aspect of the present invention, there is provided a mobile telephone unit adapted to connect a telephone system to a computer having a data port, characterized in that the unit comprises a housing containing a mobile telephone circuit and a modem connected to the mobile telephone circuit, and a connector secured to said housing and adapted to be connected to the data port of the computer for connecting the modem to the computer.

In accordance with yet another aspect of the present invention, there is provided a method of transmitting data and voice signals to a telephone system, characterized in that the method comprises the steps of providing a mobile telephone unit containing a modem, providing a computer which is adapted to communicate with the mobile telephone unit, operating the mobile telephone unit in a first mode of operation in order to transmit voice signals to the telephone system, connecting the mobile telephone unit to the computer so as to connect the modem to the computer, and operating the mobile telephone unit in a second mode of operation in order to transmit data signals to the telephone system.

The term "modem" is intended to cover all modulator/demodulator devices used in communications systems including those devices which interface a digital terminal to a digital transmission channel.

An embodiment of the present invention will now be described, by way of example, with reference to the accompanying drawings in which:-
Figure 1 is a perspective view of a computer and mobile telephone unit in accordance with the present invention, with the connector of the mobile telephone unit shown removed from the data port of the computer; and
Figure 2 is a block diagram of the computer and mobile telephone unit of Figure 1.

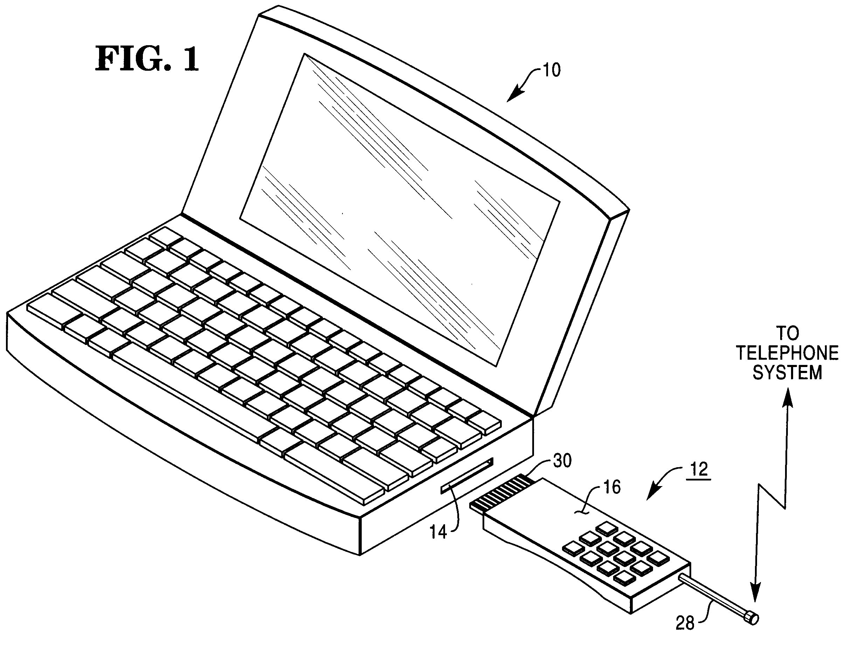

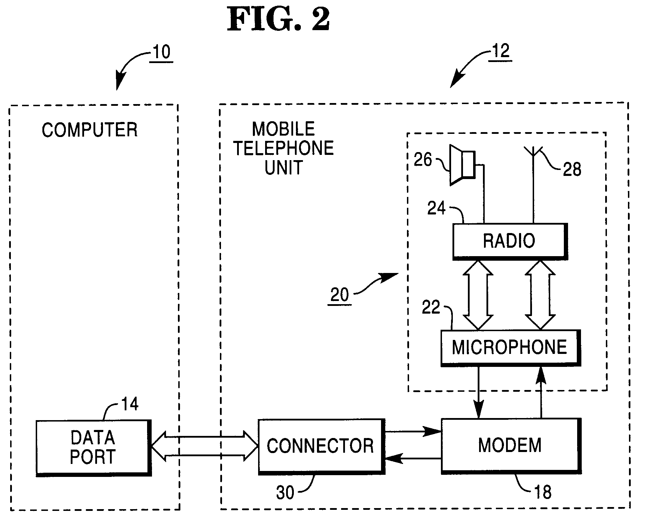

Figures 1 and 2 show a computer and a mobile telephone unit, generally indicated by the reference numerals 10 and 12, respectively. The computer 10 is a portable computer such as a laptop computer. One portable computer which could be used with modification is sold by NCR Corporation of Dayton, Ohio as Model No. 3170. The modification would be that the portable computer would not have an internal modem contained therein. The mobile telephone unit 12 is a mobile telephone which operates based on cellular telephone technology which is well known in the art.

The computer 10 includes a data port 14. The data port 14 may be a PCMCIA slot (i.e a Personal Computer Memory Card International Association slot) which accepts a variety of input/output devices. The mobile telephone unit 12 may be powered by the computer via the data port 14, or alternatively, may be self-powered.

The mobile telephone unit 12 includes a housing 16 which contains therein a modem 18 which is electrically connected to a mobile telephone circuit, generally indicated by the reference numeral 20. The mobile telephone circuit 20 is also contained within the housing 16. The mobile telephone circuit 20 includes a microphone 22, a radio 24, a speaker 26 and an antenna 28. The speaker 26 and the antenna 28 are each electrically connected to the radio 24. Similarly, the microphone 22 is electrically connected to the radio 24. The microphone 22 is also electrically connected to the modem 18 as shown in Figure. 2. The mobile telephone circuit 20 also includes circuitry (not shown) which interfaces the modem with standard mobile (e.g. cellular) telephone circuitry in order to translate the signals exiting the modem into signals which are appropriate for receipt by the telephone circuitry as is well known in the art. The mobile telephone unit 12 further includes a connector 30 which is also electrically coupled to the modem 18 as shown in Figure. 2. The connector 30 is secured to the housing 16 and includes a set of electrical terminals which extend outwardly from the housing. The connector 30 is configured to be received in within the data port 14 of the computer 10 and may have a shape configured complementary to a PCMCIA slot so as to allow appropriate receipt of the connector 30 into data port 14 thereby electrically coupling the modem 18 to the computer 10.

In accordance with one method of the present invention, a user is able to transmit data and voice signals to a telephone system. Initially, a user would be provided with the mobile telephone unit 12 which has the modem 18 located internal thereto. The user would also be provided with the computer 10 which is adapted to communicate with the mobile telephone unit 12. The user would then operate the mobile telephone unit 12 in a first mode of operation in order to transmit voice signals to the telephone system. The user could accomplish this step by turning on the mobile telephone unit 12 and talking into the telephone unit so that voice signals are received by the telephone unit and transmitted to the telephone system. The user could then connect the mobile telephone unit 12 to the computer 10 so as to connect the modem 18 to the computer 10. The user could perform this step by plugging the connector 30 of the mobile telephone unit 12 into the data port 14 of the computer 10. Thereafter, the user would operate the mobile telephone unit 12 in a second mode of operation in order to transmit data signals to the telephone system. This could be performed by the user by operating the computer 10 so that the computer generates electronic data signals and transmits such signals to the mobile telephone unit 12 through the data port 14. Such signals are then transmitted to the telephone system by the mobile telephone unit 12. The electronic data signals which are generated by the computer 10 may correspond to a facsimile message which is desired to be sent from the user's location to a recipient's location.

While the invention has been illustrated and described in detail in the drawings and foregoing description, such illustration and description is to be considered as exemplary and not restrictive in character, it being understood that only the preferred embodiment has been shown and described and that all modifications that come within the scope of the invention as claimed are desired to be protected. For example, the mobile telephone unit 12 may be a mobile telephone which operates based on standard analog cordless telephone technology which is well known in the art. The telephone signals of the standard analog cordless telephone would be received by a base station which is hard wired to the telephone system. Such telephone signals would then be transmitted from the base station to the telephone system.

## Claims

1. An apparatus for communicating with a telephone system, comprising a computer having a data port, characterized in that the apparatus further comprises a mobile telephone unit having a modem contained therein, said mobile telephone unit being connectable to the data port of said computer so as to couple the modem to said computer.

2. An apparatus according to claim 1, characterized in that said mobile telephone unit further comprises a mobile telephone circuit connected to the modem.

3. An apparatus according to claim 2, characterized in that said mobile telephone circuit is a cellular mobile telephone circuit.

4. An apparatus according to any one of the preceding claims, characterized in that said mobile telephone unit comprises means for connecting the modem to the data port of said computer.

5. An apparatus according to claim 4, characterized in that said connecting means comprises a set of terminals adapted to be received within the data port said computer.

6. A mobile telephone unit adapted to connect a telephone system to a computer having a data port, characterized in that the unit comprises a housing containing a mobile telephone circuit and a modem connected to the mobile telephone circuit, and a connector secured to said housing and adapted to be connected to the data port of the computer for connecting the modem to the computer.

7. A mobile telephone unit according to claim 6, characterized in that said connector is adapted to be received within the data port of the computer.

8. A mobile telephone unit according to claim 6, wherein the mobile telephone circuit is a cellular mobile telephone circuit.

9. A method of transmitting data and voice signals to a telephone system, characterized in that the method comprises the steps of providing a mobile telephone unit containing a modem, providing a computer which is adapted to communicate with the mobile telephone unit, operating the mobile telephone unit in a first mode of operation in order to transmit voice signals to the telephone system, connecting the mobile telephone unit to the computer so as to connect the modem to the computer, and operating the mobile telephone unit in a second mode of operation in order to transmit data signals to the telephone system.
